# EUROPÄISCHE PATENTSCHRIFT

(11) **EP 0 826 743 B1**
(45) Veröffentlichungstag und Bekanntmachung des Hinweises auf die Patenterteilung: **18.09.2002**
(21) Anmeldenummer: 97810580.7
(22) Anmeldetag: 19.08.1997
(51) Int. Cl.: C09B 67/22, D06P 3/10, C09B 62/04

(54) **Farbstoffmischungen, Verfahren zu deren Herstellung und deren Verwendung**
Mixtures of dyes, process for their preparation and the use thereof
Mélanges de colorants, leur procédé de fabrication et leur utilisation

(30) Priorität: 26.08.1996 CH 208796
(43) Veröffentlichungstag der Anmeldung: 04.03.1998
(73) Patentinhaber: Ciba Specialty Chemicals Holding Inc., 4057 Basel (CH)
(72) Erfinder: Adam, Jean-Marie, 68300 Rosenau (FR); Hurter, Rudolf, 4058 Basel (CH)

(56) Entgegenhaltungen:
- EP-A- 0 478 503
- EP-A- 0 681 007
- EP-A- 0 681 055
- EP-A- 0 735 113
- EP-A- 0 775 776
- GB-A- 2 226 336

## Beschreibung

Die vorliegende Erfindung betrifft neue Farbstoffmischungen, Verfahren zu deren Herstellung und Verwendung dieser Farbstoffmischungen zum Färben und Bedrucken von Fasermaterialien, insbesondere textilen Fasermaterialien.

Aus der EP-A-0 478 503 sind Mischungen von Mono- mit Di-s-triazinfarbstoffen und ihre Verwendung zum Färben und Bedrucken von cellulosehaltigen Fasermaterialien bekannt.

EP-A-0 681 007 offenbart Mischungen von spezifischen faserreaktiven Farbstoffen enthaltend ein s-Triazinrest welcher über -NH- mit mindestens einem durch Hydroxy substituierten Naphthylrest verbunden ist.

EP-A-0 681 055 offenbart ein Verfahren zum Färben oder Bedrucken von hydroxylgruppenhaltigen Fasermaterialien mit Farbstoffmischungen, die als Hauptkomponente einen blaufärbenden Dioxazinfarbstoff enthalten.

Aus der GB-A-2 226 336 sind Trichromiemischungen von Reaktivfarbstoffen bekannt, die einen orange- oder gelbfärbenden, einen rotfaärbenden und einen blaufärbenden Farbstoff enthalten.

Gegenstand der vorliegenden Erfindung sind Farbstoffmischungen, welche dadurch gekennzeichnet sind, dass sie mindestens einen Farbstoff der Formel 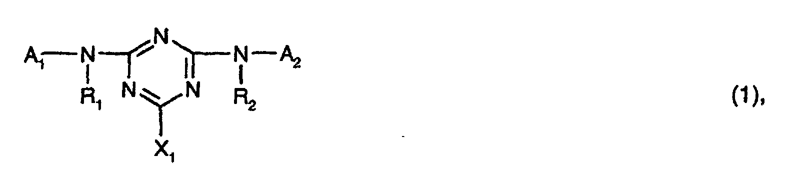 und mindestens einen Farbstoff der Formel (2) 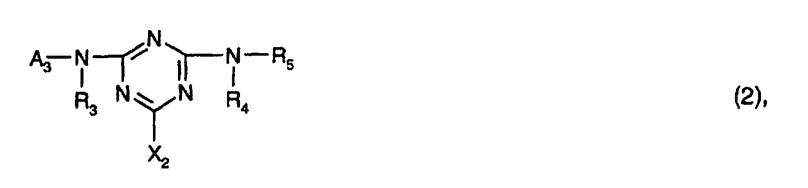 enthalten, worin
R₁, R₂, R₃ und R₄ unabhängig voneinander Wasserstoff oder C₁-C₄-Alkyl sind,
R₅ gegebenenfalls durch C₁-C₄-Alkyl, C₁-C₄-Alkoxy, C₂-C₄-Alkanoylamino, Carboxyl, Sulfo, Carbamoyl, Ureido, Halogen oder durch einen Rest der Formel -SO₂-Z substituiertes Phenyl ist, oder der Rest der Formel -N(R₄)-R₅ ein gegebenenfalls weitere Heteroatome enthaltender Ring ist, wobei
Z eine Gruppe der Formel -CH=CH₂ oder -CH₂-CH₂-Y und Y eine Abgangsgruppe ist,
X₁ und X₂ identisch sind und Halogen, gegebenenfalls im Alkylteil durch Hydroxy substituiertes N-Mono- oder N,N-Di-C₁-C₄-Alkylamino, Cyclohexylamino, Phenylamino, Morpholino oder Piperidin-1-yl ist, und
A₁, A₂ und A₃ identisch und Reste der Formel (16) 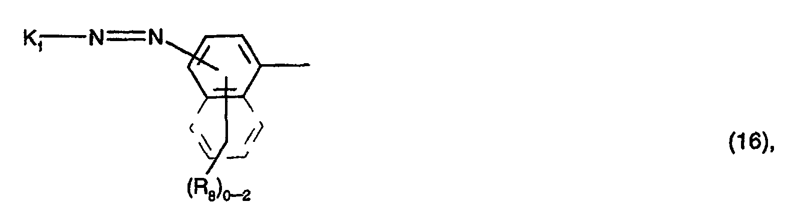 oder der Formel (9) 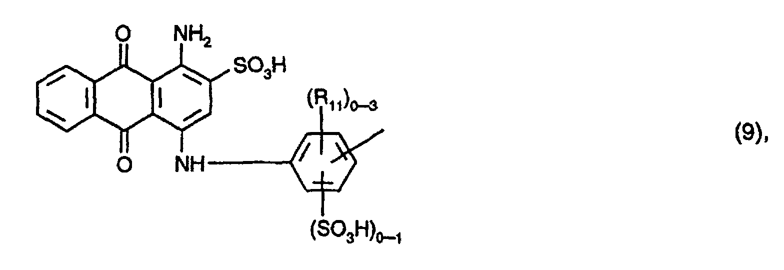 sind, worin
(R₈)₀₋₂ für 0 bis 2 gleiche oder voneinander verschiedene Substituenten ausgewählt aus der Gruppe C₁-C₄-Alkyl, C₁-C₄-Alkoxy, C₂-C₄-Alkanoylamino, Ureido und Sulfo steht,
(R₁₁)₀₋₃ für 0 bis 3 gleiche oder voneinander verschiedene Substituenten ausgewählt aus der Gruppe C₁-C₄-Alkyl, C₁-C₄-Alkoxy und Halogen, vorzugsweise für 0 bis 3 gleiche oder voneinander verschiedene C₁-C₄-Alkyl-Substituenten und insbesondere Methyl steht, und
K₁ einen Rest der Formel (17) 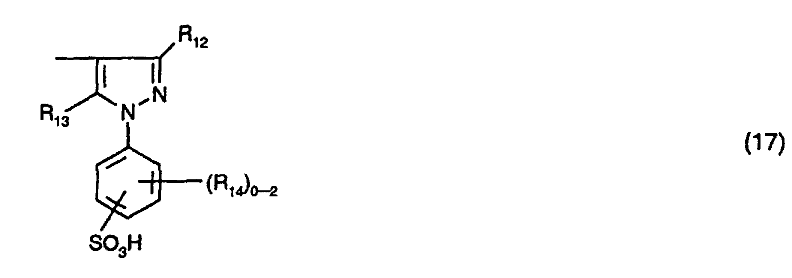 bedeutet, worin R₁₂ Methyl oder Carboxyl, insbesondere Methyl ist,
R₁₃ Amino oder Hydroxyl bedeutet, und
(R₁₄)₀₋₂ für 0 bis 2 gleiche oder voneinander verschiedene Substituenten ausgewählt aus der Gruppe C₁-C₄-Alkyl, C₁-C₄-Alkoxy, C₂-C₄-Alkanoylamino, Ureido, Halogen und Sulfo und bevorzugt für 0 bis 2 gleiche oder voneinander verschiedene Halogenatome, insbesondere Chlor, steht;
oder ein Rest der Formel (18) 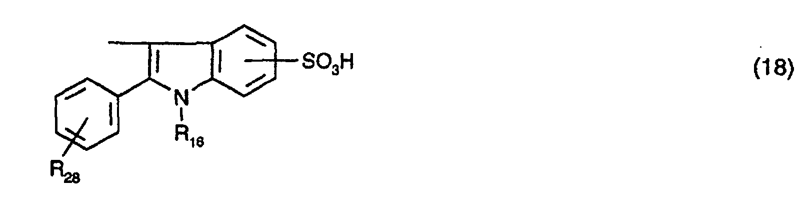 ist, worin R₁₆ Wasserstoff oder C₁-C₄-Alkyl und insbesondere Wasserstoff, und R₂₈ Wasserstoff, C₁-C₄-Alkyl, C₁-C₄-Alkoxy, C₂-C₄-Alkanoylamino oder Halogen und insbesondere Wasserstoff bedeuten;
oder einen Rest der Formel (12) 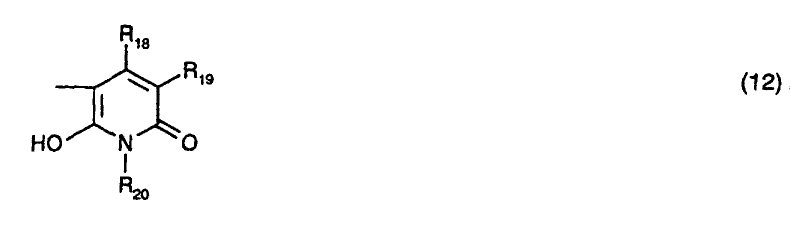 bedeutet,
worin R₁₈ Wasserstoff oder C₁-C₄-Alkyl, insbesondere Wasserstoff oder Methyl,
R₁₉ Wasserstoff, und
R₂₀ Wasserstoff, C₁-C₄-Alkyl oder gegebenenfalls durch C₁-C₄-Alkyl, C₁-C₄-Alkoxy, C₂-C₄-Alkanoylamino, Ureido, Halogen oder Sulfo substituiertes Phenyl und bevorzugt Wasserstoff oder C₁-C₄-Alkyl sind;
oder einen Rest der Formel (19) 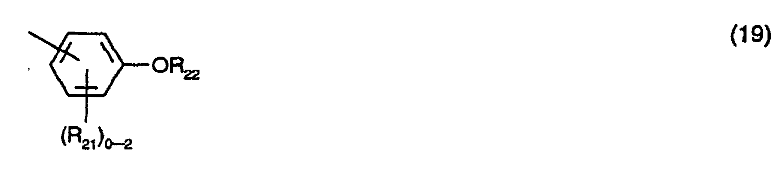 bedeutet,
worin (R₂₁)₀₋₂ für 0 bis 2 gleiche oder voneinander verschiedene Substituenten ausgewählt aus der Gruppe C₁-C₄-Alkyl, C₁-C₄-Alkoxy, C₂-C₄-Alkanoylamino, Ureido, Halogen und Sulfo, und bevorzugt für 0 bis 2 gleiche oder voneinander verschiedene Substituenten ausgewählt aus der Gruppe C₁-C₄-Alkyl und C₁-C₄-Alkoxy steht, und
R₂₂ Wasserstoff oder C₁-C₄-Alkyl ist;
oder ein Rest der Formel (20) 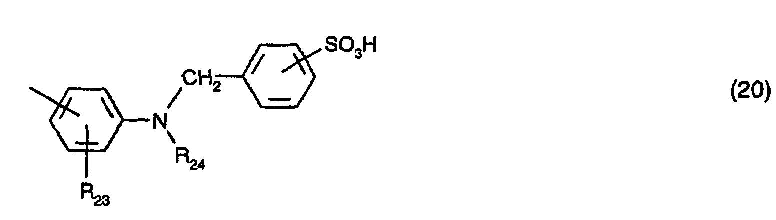 ist,
worin R₂₃ Wasserstoff, C₁-C₄-Alkyl, C₁-C₄-Alkoxy, C₂-C₄-Alkanoylamino oder Halogen und bevorzugt Wasserstoff, C₁-C₄-Alkyl oder C₁-C₄-Alkoxy bedeutet,
R₂₄ Wasserstoff oder C₁-C₄-Alkyl ist;
oder Reste der Formeln (21) oder (22) 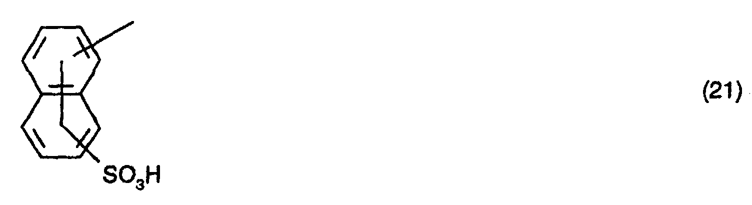 oder 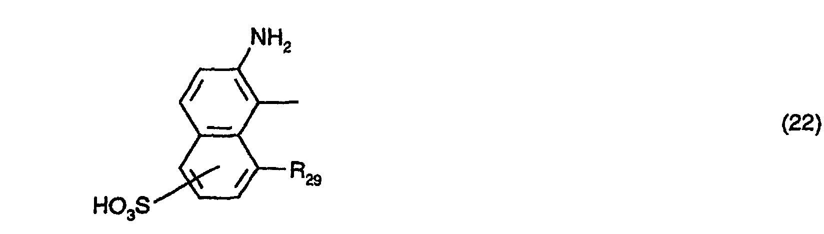 bedeutet,
worin R₂₉ Wasserstoff oder Hydroxyl ist.

Als C₁-C₄-Alkyl kommen für R₁, R₂, R₃ und R₄ unabhängig voneinander beispielsweise Methyl, Aethyl, Propyl, Isopropyl, Butyl, sek.-Butyl, tert.-Butyl oder Isobutyl in Betracht. Die genannten Alkylreste können unsubstituiert oder beispielsweise durch Hydroxy, Sulfo, Sulfato, Cyano oder Carboxyl substituiert sein. Bevorzugt sind die entsprechenden unsubstituierten Alkylreste.

R₅ als Phenylrest kann unsubstituiert oder substituiert sein durch C₁-C₄-Alkyl, wie beispielsweise Methyl, Aethyl, Propyl, Isopropyl, Butyl, sek.-Butyl, tert.-Butyl oder Isobutyl, insbesondere Methyl oder Ethyl; C₁-C₄-Alkoxy, wie beispielsweise Methoxy, Aethoxy, Propoxy, Isopropoxy, Butoxy, sek.-Butoxy, Isobutoxy oder tert.-Butoxy, insbesondere Methoxy oder Aethoxy; C₂-C₄-Alkanoylamino, wie beispielsweise Acetylamino, Propionylamino oder Butyrylamino, insbesondere Acetylamino; Carboxyl; Sulfo; Carbamoyl; Ureido; Halogen, wie beispielsweise Fluor, Chlor oder Brom; oder durch einen Rest der Formel -SO₂-Z.

Als gegebenenfalls weitere Heteroatome enthaltender Ring kommt für den Rest der Formel -N(R₄)-R₅ beispielsweise Piperidin-1-yl, Piperazin-1-yl und insbesondere Morpholino in Betracht.

Als Z kommt insbsondere -CH₂-CH₂-Y in Betracht.

Y bedeutet beispielsweise -Cl, -OSO₃H, -SSO₃H, -OCO-CH₃, -OCO-C₆H₅ oder-OPO₃H₂, insbesondere eine Gruppe der Formel -Cl oder -OSO₃H und vorzugsweise eine Gruppe der Formel -OSO₃H.

X₁ und X₂ als Halogen bedeuten beispielsweise Fluor, Chlor oder Brom, inbesondere Chlor.

X₁ und X₂ als N-Mono- oder N,N-Di-C₁-C₄-Alkylamino bedeuten beispielsweise N-Methylamino, N-Aethylamino, N-Propylamino, N,N-Di-Methylamino oder N,N-Di-Aethylamino. Die genannten Reste können im Alkylteil unsubstituiert oder durch Hydroxy substituiert sein. Als Beispiele für die im Alkylteil substituierten Reste seien N-β-Hydroxyaethylamino und N,N,-Di-β-Hydroxyaethylamino genannt.

R₁, R₂ und R₃ sind besonders bevorzugt Wasserstoff, Methyl oder Aethyl, insbesondere Wasserstoff. R₄ ist besonders bevorzugt C₁-C₄-Alkyl, insbesondere Methyl oder Aethyl und vorzugsweise Aethyl.

R₅ bedeutet besonders bevorzugt gegebenenfalls durch C₁-C₄-Alkyl, C₁-C₄-Alkoxy, C₂-C₄-Alkanoylamino, Carboxyl, Sulfo, Carbamoyl, Ureido, Halogen oder durch einen Rest der Formel -SO₂-Z substituiertes Phenyl, insbesondere unsubstituiertes oder durch Sulfo oder Carboxyl substituiertes Phenyl.

X₁ und X₂ bedeuten bevorzugt Halogen, Amino, gegebenenfalls im Alkylteil durch Hydroxyl, Sulfo, Carboxyl, C₂-C₄-Alkanoylamino oder C₁-C₄-Alkoxy substituiertes N-Mono- oder N,N-Di-C₁-C₄-Alkylamino, oder gegebenenfalls im Cycloalkylring durch C₁-C₄-Alkyl substituiertes C₅-C₇-Cycloalkylamino, oder gegebenenfalls im Phenylring durch C₁-C₄-Alkyl, C₁-C₄-Alkoxy, Carboxyl, Sulfo oder Halogen substituiertes Phenylamino oder N-C₁-C₄-Alkyl-N-phenylamino, Morpholino oder Piperidin-1-yl.

X₁ und X₂ bedeuten ganz besonders bevorzugt Morpholino, Piperidin-1-yl oder Halogen.

Ganz besonders wichtig ist für X₁ und X₂ die Bedeutung Halogen und insbesondere Chlor.

Die Reste A₁, A₂ und A₃ können an ihrem Grundgerüst die bei organischen Farbstoffen üblichen Substituenten gebunden enthalten.

Ganz besonders bevorzugt sind Farbstoffmischungen welche dadurch gekennzeichnet sind, dass sie mindestens einen Farbstoff der Formel (1) und mindestens einen Farbstoff der Formel (2) enthalten, worin
R₁, R₂, R₃ und R₄ unabhängig voneinander Wasserstoff oder C₁-C₄-Alkyl,
R₅ gegebenenfalls durch C₁-C₄-Alkyl, C₁-C₄-Alkoxy, C₂-C₄-Alkanoylamino, Carboxyl, Sulfo, Carbamoyl, Ureido, Halogen oder durch einen Rest der Formel -SO₂-Z substituiertes Phenyl ist,
X₁ und X₂ unabhängig voneinander Halogen, gegebenenfalls im Alkylteil durch Hydroxyl substituiertes N-Mono- oder N,N-Di-C₁-C₄-Alkylamino, Cyclohexylamino, Phenylamino, Morpholino oder Piperidin-1-yl, insbesondere Halogen, bedeuten, und
für die Reste A₁, A₂, A₃ und Z hierbei die oben angegebenen Bedeutungen und Bevorzugungen gelten.

Die Farbstoffe der Formel (1) können beispielsweise erhalten werden, indem man Cyanurhalogenid, insbesondere Cyanurfluorid oder vorzugsweise Cyanurchlorid, mit einer Verbindung der Formel (24)

A₁-NHR₁ (24),

einer Verbindung der Formel (25)

A₂-NHR₂ (25)

und einer Verbindung der Formel (26)

X₁-H (26)

umsetzt, wobei A₁, A₂, X₁, R₁ und R₂ die unter Formel (1) angegebenen Bedeutungen haben.

Vorzugsweise setzt man Cyanurhalogenid zunächst mit in etwa stöchiometrischen Mengen einer Verbindung der Formel (24) bei einer Temperatur von -5 bis 20°C, vorzugsweise 0 bis 5°C um, wobei der pH-Wert durch Zugabe geeigneter Basen, z.B. Alkalimetallbasen wie Lithium-, Natrium- oder Kaliumhydroxid oder -carbonat, neutral bis sauer, vorzugsweise bei 2 bis 7 gehalten wird. Zu dem erhaltenen Reaktionsgemisch werden zweckmässigerweise in etwa stöchiometrische Mengen einer Verbindung der Formel (25) gegeben und diese bei leicht erhöhter Temperatur, vorzugsweise bei 10 bis 60°C und einem neutralen bis leicht sauren pH-Wert, der vorzugsweise 6 bis 7 beträgt, mit dem Triazinderivat zur Reaktion gebracht. Handelt es sich bei den Verbindungen der Formeln (24) und (25) um identische Verbindungen mit A₁ = A₂ und R₁ = R₂, so setzt man ca. 2 Aequivalente einer Verbindung der Formel (24) mit 1 Aequivalent Cyanurchlorid oder Cyanurfluorid um, wobei die Temperatur zunächst bei -5 bis 20°C, vorzugsweise 0 bis 5°C, gehalten und dann auf vorzugsweise 10 bis 60°C erhöht wird.

Eine weitere Möglichkeit besteht darin, Cyanurhalogenid zunächst mit einem Vorprodukt der Verbindung der Formel (24), wie z.B. einer Diazokomponente im Falle von Azofarbstoffresten, umzusetzen und dann, beispielsweise durch Diazotierung und Kupplung, zum entsprechenden Farbstoffrest A₁ umzusetzen. Diese Umsetzung zum Farbstoffrest kann z.B. vorzugsweise direkt im Anschluss an die Umsetzung von Cyanurhalogenid mit dem Vorprodukt erfolgen, oder aber auch im weiteren Verlauf der Synthese des Farbstoffs der Formel (1).

Die gemäss den oben beschriebenen Verfahren erhältlichen Triazinylverbindungen enthalten noch ein Halogenatom, welches durch Reaktion mit einer Verbindung der Formel (26) bei erhöhter Temperatur, vorzugsweise 20 bis 70°C, und einem neutralen bis leicht alkalischen pH-Wert, der je nach eingesetzter Verbindung der Formel (26) z.B. 7 bis 9 beträgt, in eine Gruppe X₁ umgewandelt werden kann. Vorteilhafterweise setzt man einen Ueberschuss der Verbindung der Formel (26) ein.

Die Farbstoffe der Formel (2) können in einer der Herstellung der Farbstoffe der Formel (1) analogen Vorgehensweise erhalten werden, indem man beispielsweise Cyanurhalogenid, insbesondere Cyanurfluorid oder vorzugsweise Cyanurchlorid mit einer Verbindung der Formel (27)

A₃-NHR₃ (27)

einer Verbindung der Formel (28)

R₅-NHR₄ (28),

und einer Verbindung der Formel (29)

X₂-H (29)

umsetzt, wobei A₃, R₃, R₄, R₅ und X₂ die unter Formel (2) angegebenen Bedeutungen haben.

Die in den obigen Verfahren eingesetzten Verbindungen sind bekannt oder können in Analogie zu bekannten Verbindungen erhalten werden.

Die Farbstoffmischungen der Farbstoffe der Formeln (1) und (2) können z.B. durch Mischung der Einzelfarbstoffe hergestellt werden. Dieser Mischprozess erfolgt beispielsweise in geeigneten Mühlen, z.B. Kugel- und Stiftmühlen, sowie in Knetem oder Mixern.

Ferner können die Farbstoffmischungen z.B. durch Zerstäubungstrocknung der wässrigen Farbstoffmischungen hergestellt werden.

Die Farbstoffmischungen enthalten bevorzugt 5 bis 95 Gew.%, insbesondere 10 bis 90 Gew.-% und vorzugsweise 20 bis 80 Gew.% eines Farbstoffs der Formel (1), bezogen auf die Gesamtmenge der Farbstoffe der Formeln (1) und (2). Besonders bevorzugt enthalten die Farbstoffmischungen 30 bis 70 Gew.%, insbesondere 35 bis 65 Gew.-% eines Farbstoffs der Formel (1), bezogen auf die Gesamtmenge der Farbstoffe der Formeln (1) und (2).

Die Farbstoffe der Formeln (1) und (2) liegen entweder in der Form ihrer freien Säure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kaliumoder Ammoniumsalze oder das Salz des Mono-, Di- oder Triäthanolamins genannt.

Die Bedeutung Sulfo umfasst generell die freie Säureform (-SO₃H) als auch die Salzform.

Bei den Farbstoffen der Formeln (1) und (2) handelt es sich um anionische Säurefarbstoffe. In den Farbstoffen der Formeln (1) und (2) ist die Zahl der anionischen Gruppen, insbesondere die Zahl der Sulfogruppen, grösser oder gleich der Zahl der kationischen Gruppen. Vorzugsweise ist die Zahl der anionischen Gruppen grösser als die Zahl der kationischen Gruppen. Unter kationischen Gruppen sind solche zu verstehen, welche unter den üblichen Färbebedingungen eine kationische Ladung tragen. Als Beispiele seien aliphatisch gebundene Aminoreste genannt. Die im Triazinring vorhandenen sowie die an den Triazinrest gebundenen Stickstoffatome tragen keine kationische Ladung.

Die erfindungsgemässen Farbstoffmischungen eignen sich nach an sich bekannten Methoden zum Färben und Bedrucken, insbesondere von stickstoffhaltigen oder hydroxylgruppenhaltigen Fasermaterialien, Papier oder Leder, wie z.B. textilen Fasermaterialien aus Cellulose, Seide und insbesondere Wolle und synthetischen Polyamiden. Bevorzugt ist das Färben oder Bedrucken von natürlichen oder synthetischen Polyamidfasermaterialien. Die erfindungsgemässen Farbstoffmischungen können in allgemein üblicher, gegebenenfalls zuvor aufbereiteter Form zum Färben oder Bedrucken verwendet werden. Man erhält egale Färbungen mit guten Allgemeinechtheiten, insbesondere guter Reib-, Nass-, Nassreib- und Lichtechtheit. Femer sind die erfindungsgemässen Farbstoffmischungen gut wasserlöslich und gut mit anderen Farbstoffen kombinierbar. Das oben genannte Textilmaterial kann in den verschiedensten Verarbeitungsformen vorliegen, wie z.B. als Faser, Garn, Gewebe oder Gewirke.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Herstellungsbeispiel 1:

19,1 Teile 1,3-Phenylendiamin-4-sulfonsäure (98,6%) werden in 100 Teilen Wasser und 52 Teilen einer wässrigen, 2-normalen Natriumhydroxidlösung bei einem pH-Wert von 7 gelöst und innerhalb von 50 Minuten, bei einer Temperatur von 5°C, in ein Gemisch bestehend aus 18,5 Teilen Cyanurchlorid, 100 Teilen Eis und 50 Teilen Wasser getropft. Während des Zutropfens wird der pH bei einem Wert von 3 bis 3,5 gehalten. Anschliessend wird mit 50 Teilen einer wässrigen, 2-normalen Natriumhydroxidlösung der pH-Wert innerhalb von 70 Minuten auf 7 erhöht. Nach einer Stunde werden 25 Teile Salzsäure (37%) und 200 Teile Wasser zugegeben und, bei einer Temperatur von 5 bis 15°C, 25 Teile einer wässrigen, 4-molaren Natriumnitritlösung innerhalb von 25 Minuten zudosiert. Nach zwei Stunden wird das überschüssige Natriumnitrit mit Sulfaminsäure zerstört. Wärenddessen werden 22,5 Teile 2-Naphthylamin-5-sulfonsäure in 100 Teilen Wasser und 52 Teilen einer wässrigen, 2-normalen Natriumhydroxidlösung bei einem pH-Wert von 7 gelöst und innerhalb von 30 Minuten in das Reaktionsgemisch getropft. Darauf wird der pH mittels 112 Teilen einer wässrigen, 2-normalen Natriumhydroxidlösung innerhalb von 80 Minuten auf einen Wert von 7 gestellt. Anschliessend wird eine Lösung von 12,2 Teilen N-Ethylanilin in 100 Teilen 1-molarer Salzsäure innerhalb von 15 Minuten zugetropft, gefolgt von der Zugabe von 101 Teilen einer wässrigen, 2-normalen Natriumhydroxidlösung innerhalb von 50 Minuten. Die dunkelrote Reaktionslösung wird mit 500 Teilen einer wässrigen Natriumchloridlösung versetzt, das ausgefallene Produkt abfiltriert, mit 10%-iger wässriger Natriumchloridlösung gewaschen und im Vakuum bei einer Temperatur von 70°C getrocknet. Man erhält 52,5 Teile der Verbindung der Formel

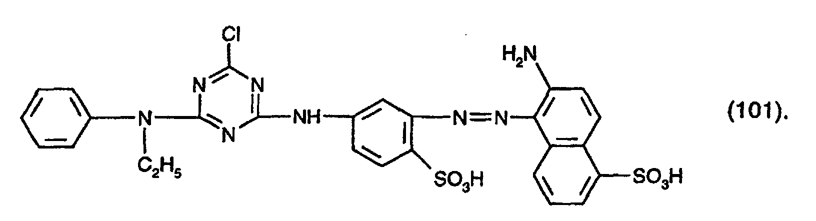

### Herstellungsbeispiele 2 bis 10:

In analoger Weise zu den Angaben in Herstellungsbeispiel 1 können die in der folgenden Tabelle 1 in Form der freien Säuren angegebenen Farbstoffe erhalten werden.

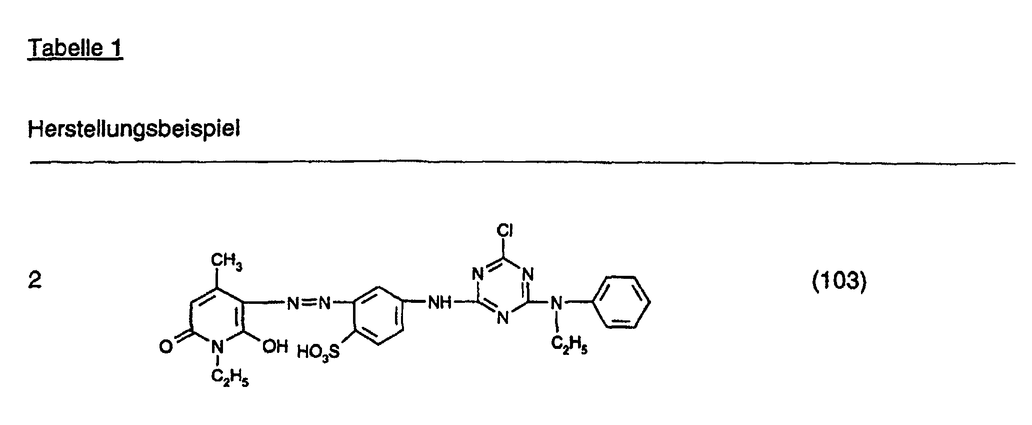

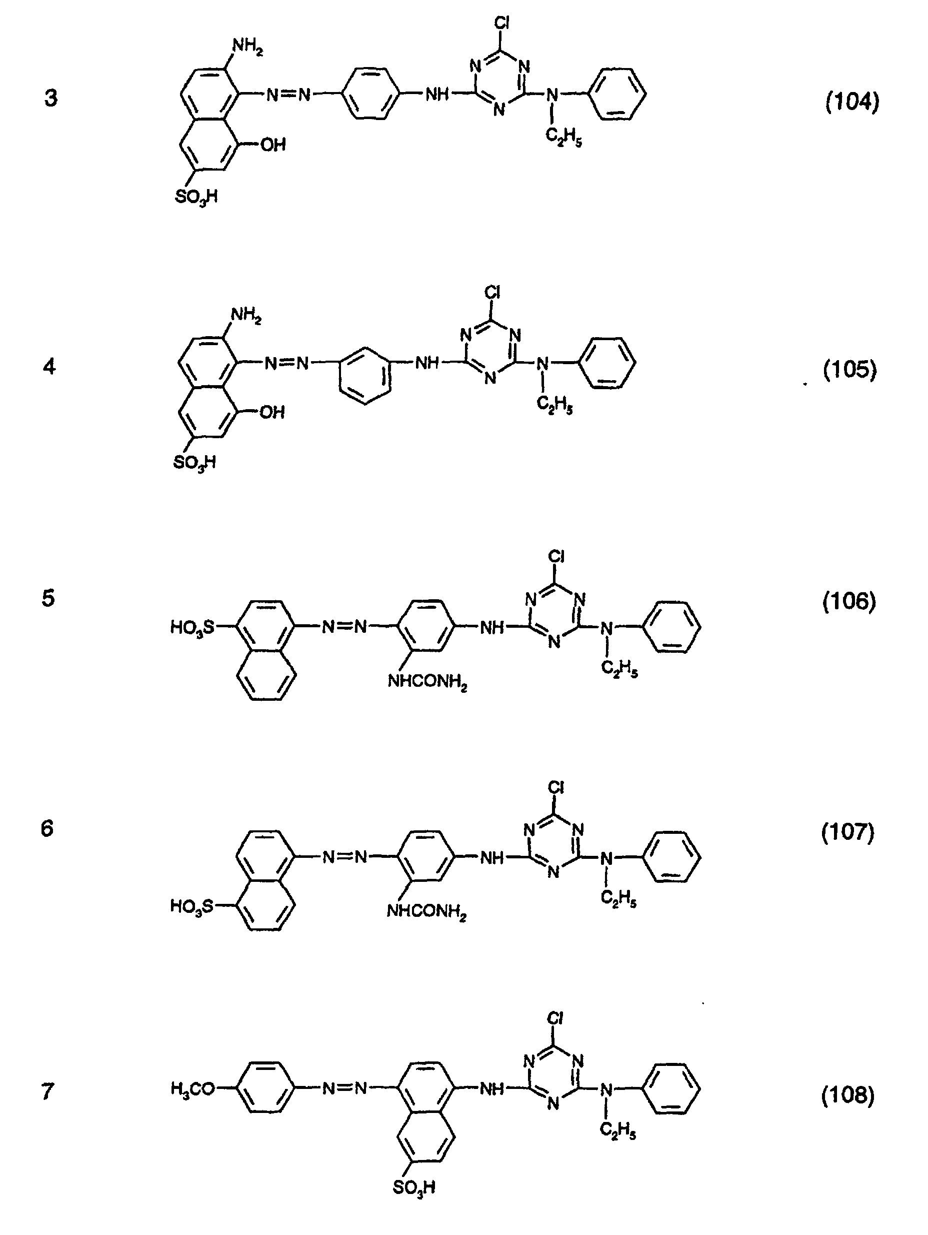

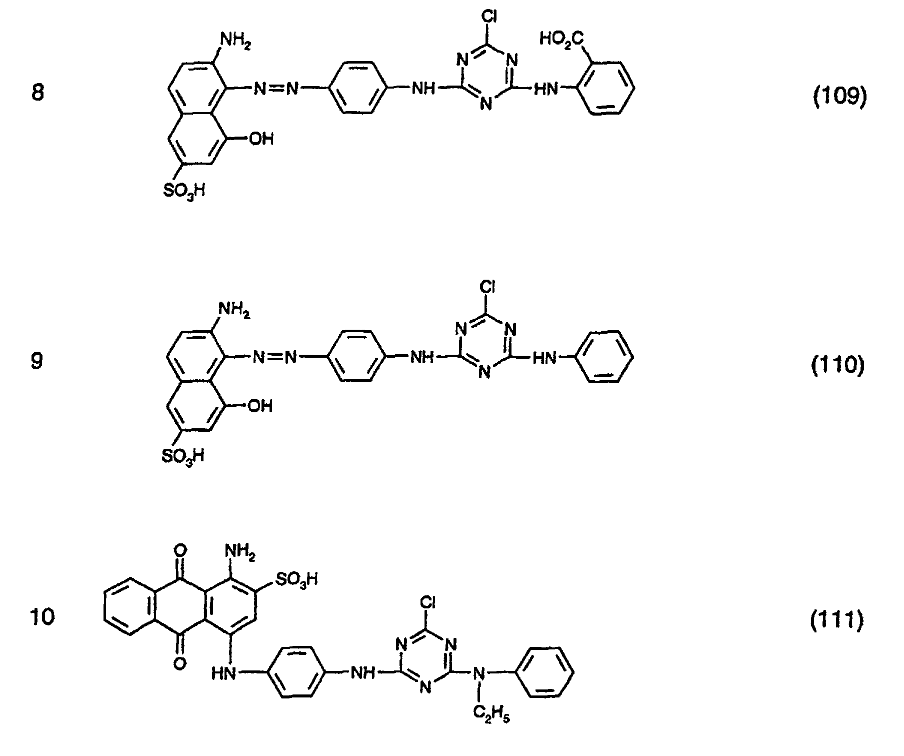

Im Unterschied zu den Azofarbstoffen der Formeln (101) bis (110) erhält man den Anthrachinonfarbstoff der Formel (111), indem man zunächst die Verbindung der Formel (112) 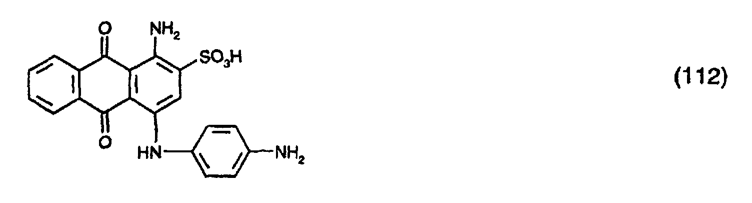 mit Cyanurchlorid kondensiert und dann das erhaltene Kondensat mit N-Ethylanilin, analog der in Herstellungsbeispiel 1 beschriebenen Vorgehensweise, umsetzt.

Herstellungsbeispiel 11: 70 Teile Cyanurchlorid werden in 950 Teilen Eis und 200 Teilen Wasser, unter Zusatz von 3,6 Teilen Dinatriumdihydrogenphosphat x 12 H₂O, 30 Minuten verrührt. Dann wird innerhalb von 10 Minuten eine auf einen pH-Wert von 5,5 gestellte Lösung von 116,4 Teilen 4-(β-Sulfatoäthylsulfonyl)-anilin (92%) in 900 Teilen Wasser zugegeben. Der pH wird hierbei durch Zugabe von 2-normaler Natronlauge auf einem Wert von 4,5 bis 5 gehalten. Anschliessend gibt man 500 Teile Aceton zu und rührt bei einer Temperatur von 0 bis 5°C bis die Laugenaufnahme beendet ist. Dann nutscht man den Niederschlag ab und wäscht zunächst mit Wasser und dann mit Aceton nach. Der erhaltene Niederschlag wird bei Raumtemperatur unter Vakuum getrocknet. Man erhält eine Verbindung, welche in Form der freien Säure der Formel (113) entspricht.

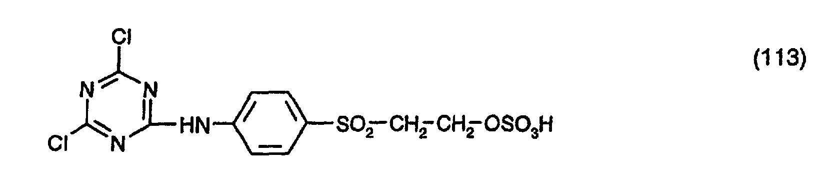

20 Teile der Verbindung der Formel (113) werden in 150 Teile Wasser suspendiert und dann langsam in eine Suspension, welche 24,8 Teile der in Form der freien Säure angegebenen Verbindung der Formel (114) 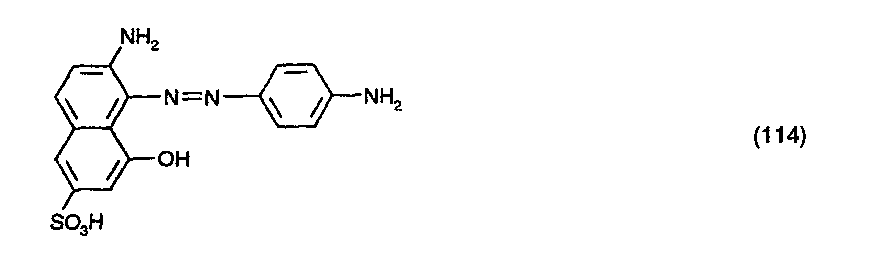 in 150 Teilen Wasser enthält, gegeben. Anschliessend wird der pH auf einen Wert von 6 gestellt und dann das Reaktionsgemisch auf eine Temperatur von 35°C erwärmt. Der pH wird dabei durch Zugabe von 2-normaler Natronlauge auf einem Wert von 6 gehalten. Nach 2 Stunden ist die Laugenaufnahme beendet. Man gibt Natriumchlorid (ca. 20 Vol.-%, bezogen auf die Reaktionsmischung) zu, nutscht das ausgefallene Produkt ab und wäscht mit einer geringen Menge einer wässrigen Lösung von Natriumchlorid nach. Nach dem Trocknen bei einer Temperatur von 35°C unter Vakuum erhält man einen Farbstoff, der in Form der freien Säure der Verbindung der Formel (115) entspricht.

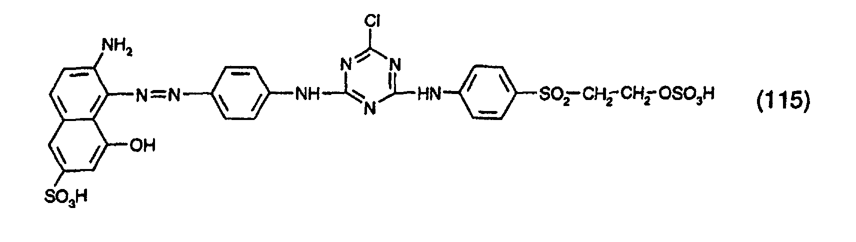

Herstellungsbeispiel 12: 1,85 Teile Cyanurchlorid werden in 25 Teilen Eis, 5 Teilen Wasser und 0,1 Teilen Dinatriumhydrogenphosphat unter Eiskühlung während 30 Minuten vermahlen.

Zur Herstellung einer zweiten Lösung werden 7,16 Teile der Verbindung der Formel (114) bei einer Temperatur von 25 bis 30°C und einem pH-Wert von 8,5 bis 9 in 160 Teilen Wasser gelöst. Die so erhaltene Lösung der Verbindung der Formel (114) wird zu der wie oben angegeben erhaltenen Cyanurchlorid-Anschlämmung zugetropft. Man erwärmt dann langsam auf eine Temperatur von 45 bis 50°C und erhöht den pH durch Zugabe von wässriger Natronlauge auf einen Wert von 9. Das Reaktionsgemisch wird anschliessend mit Äthanol verdünnt und dann filtriert. Nach Waschen mit einer Äthanol/Wasser-Mischung (im Verhältnis 1:1) wird der Farbstoff bei einer Temperatur von 50 bis 60°C im Vakuum getrocknet. Man erhält 5,4 Teile eines Farbstoffs, welcher in Form der freien Säure der Verbindung der Formel (116) entspricht.

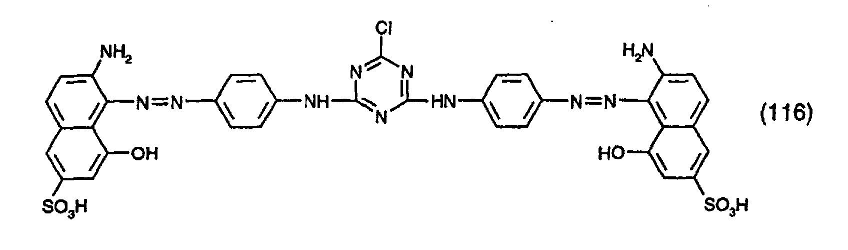

### Herstellungsbeispiele 13 bis 18:

In analoger Weise zu den Angaben in Herstellungsbeispiel 12 können die in der folgenden Tabelle 2 in Form der freien Säuren angegebenen Farbstoffe erhalten werden.

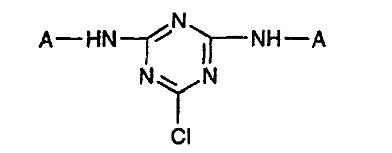

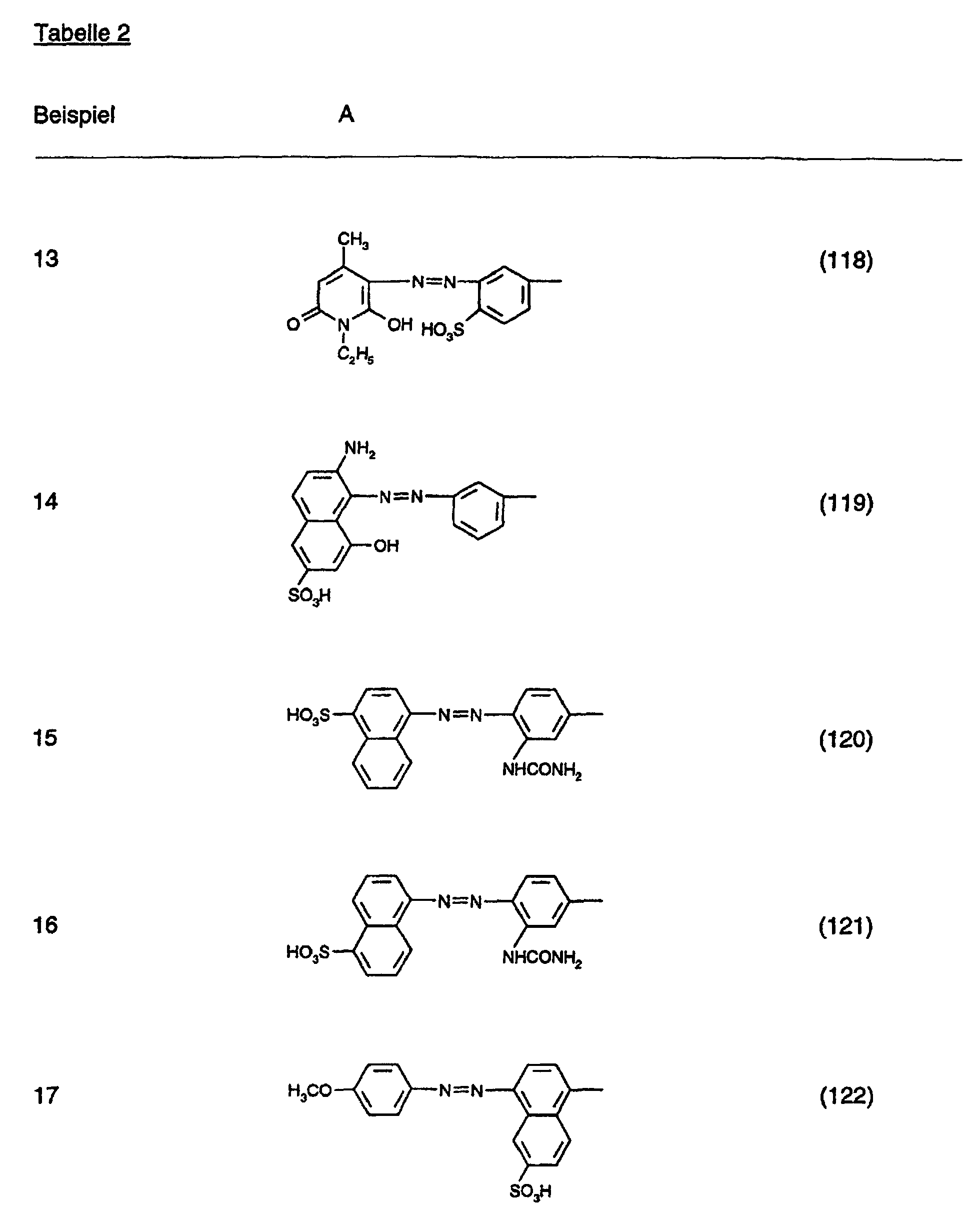

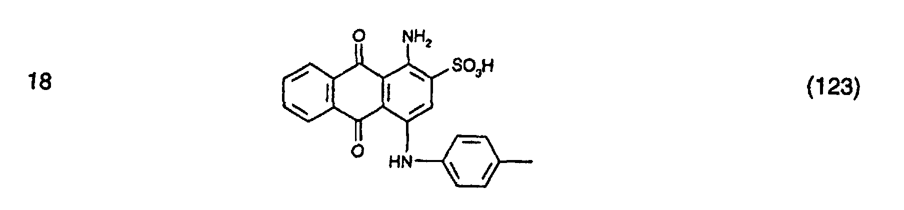

Im Unterschied zu den Azofarbstoffen der Formeln (116) bis (122) erhält man den Anthrachinonfarbstoff der Formel (123), Indem man die Verbindung der Formel (112) mit Cyanurchlorid, analog der in Herstellungsbeispiel 13 beschriebenen Vorgehensweise, kondensiert.

### Beispiele für Farbstoffmischungen

Durch Mischen in einem Mixer werden jeweils 100 Teile der in der folgenden Tabelle 3 angegebenen Farbstoffmischungen hergestellt, welche Wolle und synthetisches Polyamidfasermaterial in den angegebenen Farbtönen färben.

**Tabelle 3**

| Bsp. | Farbstoffmischung | Farbton auf Wolle |
|---|---|---|
| 19 | Mischung aus | |
| | 65 Teilen des Farbstoffs gemäss Herstellungsbeispiel 3 | rot |
| | 35 Teilen des Farbstoffs gemäss Beispiel 12 | |
| | | |
| 20 | Mischung aus | |
| | 50 Teilen des Farbstoffs gemäss Herstellungsbeispiel 3 | rot |
| | 50 Teilen des Farbstoffs gemäss Beispiel 12 | |
| | | |
| 21 | Mischung aus | |
| | 50 Teilen des Farbstoffs gemäss Herstellungsbeispiel 7 | gelb |
| | 50 Teilen des Farbstoffs gemäss Beispiel 17 | |
| | | |
| 22 | Mischung aus | |
| | 50 Teilen des Farbstoffs gemäss Herstellungsbeispiel 5 | orange |
| | 50 Teilen des Farbstoffs gemäss Beispiel 15 | |
| | | |
| 23 | Mischung aus | |
| | 50 Teilen des Farbstoffs gemäss Herstellungsbeispiel 4 | rot |
| | 50 Teilen des Farbstoffs gemäss Beispiel 14 | |
| | | |
| 24 | Mischung aus | |
| | 50 Teilen des Farbstoffs gemäss Herstellungsbeispiel 2 | gelb |
| | 50 Teilen des Farbstoffs gemäss Beispiel 13 | |
| | | |
| 25 | Mischung aus | |
| | 50 Teilen des Farbstoffs gemäss Herstellungsbeispiel 10 | blau |
| | 50 Teilen des Farbstoffs gemäss Beispiel 18 | |
| | | |
| 26 | Mischung aus | |
| | 50 Teilen des Farbstoffs gemäss Herstellungsbeispiel 8 | rot |
| | 50 Teilen des Farbstoffs gemäss Beispiel 12 | |
| | | |
| 27 | Mischung aus | |
| | 50 Teilen des Farbstoffs gemäss Herstellungsbeispiel 9 | rot |
| | 50 Teilen des Farbstoffs gemäss Beispiel 12 | |
| | | |
| 28 | Mischung aus | |
| | 50 Teilen des Farbstoffs gemäss Herstellungsbeispiel 6 | orange |
| | 50 Teilen des Farbstoffs gemäss Beispiel 16 | |
| | | |
| 29 | Mischung aus | |
| | 50 Teilen des Farbstoffs gemäss Herstellungsbeispiel 11 | rot |
| | 50 Teilen des Farbstoffs gemäss Beispiel 12 | |

### Beispiele für Färbungen

### Beispiel 30:

Man färbt 10 Teile Polyamid-6.6-Fasermaterial (Helankatrikot) in 500 Teilen einer wässrigen Flotte, die 2 g/l Ammoniumacetat enthält und mit Essigsäure auf pH 5 gestellt wird. Der Anteil der Farbstoffmischung gemäss Beispiel 20 beträgt 0.8 % bezogen auf das Fasergewicht. Die Färbedauer bei einer Temperatur von 98°C beträgt 30 bis 90 Minuten. Das gefärbte Fasermaterial wird anschliessend herausgenommen und wie üblich gewaschen und getrocknet. Man erhält ein rot gefärbtes Gewebestück, das gute Gesamtechtheiten aufweist.

### Beispiel 31:

10 Teile Wollstrickgam werden bei 30°C in ein Färbebad eingerührt, das auf 100 Teile Wasser 0.8 Teile der Farbstoffmischung gemäss Beispiel 19, 0.5 Teile Natriumsulfat und 2 Teile Natriumacetat enthält und mit Essigsäure (80%) auf einen pH-Wert von 4,5 gestellt ist. Die Flotte wird im Verlauf von 45 Minuten zum Sieden gebracht und während weiteren 45 bis 70 Minuten bei Kochtemperatur gehalten. Daraufhin wird das Färbegut herausgenommen, mit kaltem Wasser gründlich gespült und getrocknet. Man erhält eine rote Wollfärbung mit guten Echtheitseigenschaften.

### Beispiel 32:

100 Teile Bekleidungsvelourleder werden bei 50°C in einer Lösung von 1000 Teilen Wasser und 2 Teilen 24%-igem Ammoniak während 2 Stunden aufgewalkt und anschliessend bei 60 °C in einer Lösung von 1000 Teilen Wasser, 2 Teilen 24%igem Ammoniak und 2 Teilen eines Farbstoffgemischs gemäss Beispiel 19 während einer Stunde gefärbt. Hierauf gibt man eine Lösung von 40 Teilen Wasser und 4 Teilen 85%-iger Ameisensäure zu und färbt noch weitere 30 Minuten. Dann werden die Leder gut gespült und gegebenenfalls noch mit 2 Teilen eines Dicyandiamid-Formaldehydkondensationsprodukts während 30 Minuten bei 50°C behandelt. Man erhält eine rote Färbung mit guten Gesamtechtheiten.

## Patentansprüche

1. Farbstoffmischungen, **dadurch gekennzeichnet, dass** sie mindestens einen anionischen Farbstoff der Formel (1) 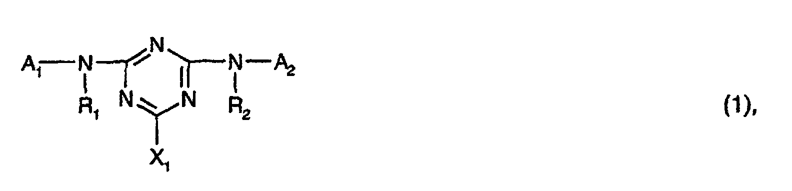 und mindestens einen anionischen Farbstoff der Formel (2) 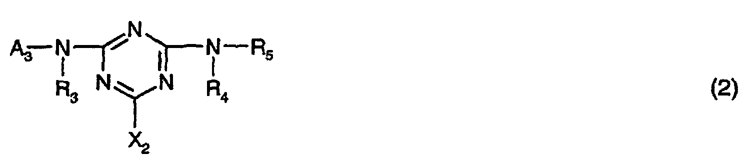 enthalten, worin
R₁, R₂, R₃, und R₄ unabhängig voneinander Wasserstoff oder C₁-C₄-Alkyl sind,
R₅ gegebenenfalls durch C₁-C₄-Alkyl, C₁-C₄-Alkoxy, C₂-C₄-Alkanoylamino, Carboxyl, Sulfo, Carbamoyl, Ureido, Halogen oder durch einen Rest der Formel -SO₂-Z substituiertes Phenyl ist oder der Rest der Formel -N(R₄)-R₅ ein gegebenenfalls weitere Heteroatome enthaltender Ring ist, wobei Z eine Gruppe der Formel -CH=CH₂ oder -CH₂-CH₂-Y und Y eine Abgangsgruppe ist,
X₁ und X₂ identisch sind und Halogen, gegebenenfalls im Alkylteil durch Hydroxyl substituiertes N-Mono- oder N,N-Di-C₁-C₄-Alkylamino, Cyclohexylamino, Phenylamino, Morpholino oder Piperidin-1-yl, bedeuten, und
A₁, A₂ und A₃ identisch, und Reste der Formel (16) 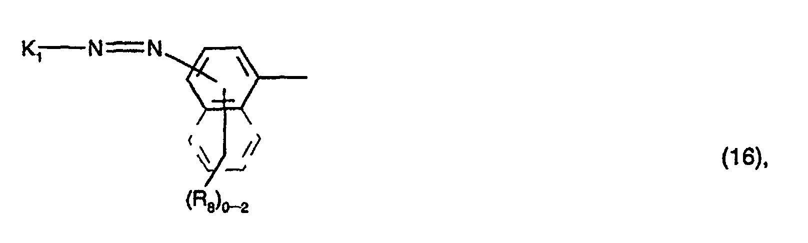 oder 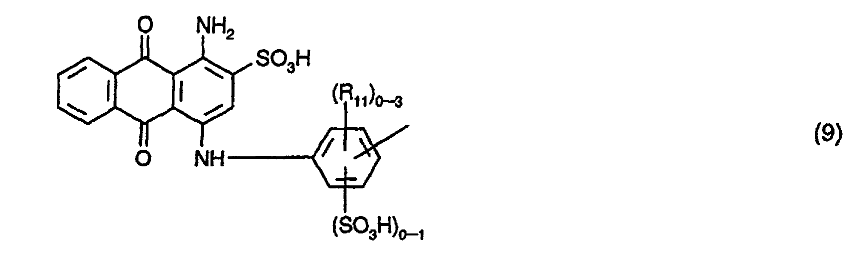 sind,
worin
(R₈)₀₋₂ für 0 bis 2 gleiche oder voneinander verschiedene Substituenten ausgewählt aus der Gruppe C₁-C₄-Alkyl, C₁-C₄-Alkoxy, C₂-C₄-Alkanoylamino, Ureido und Sulfo steht,
(R₁₁)₀₋₃ für 0 bis 3 gleiche oder voneinander verschiedene Substituenten ausgewählt aus der Gruppe C₁-C₄-Alkyl, C₁-C₄-Alkoxy und Halogen steht, und
K₁ einen Rest der Formel (17) 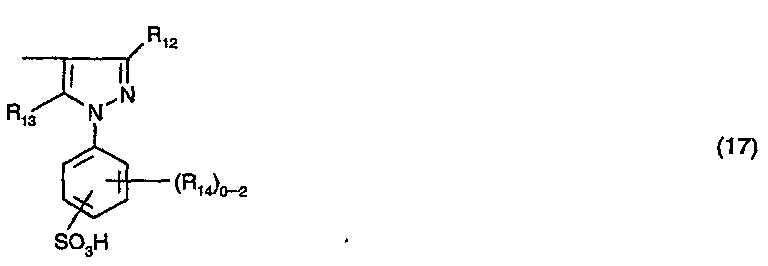 bedeutet,
worin
R₁₂ Methyl oder Carboxyl ist,
R₁₃ Amino oder Hydroxyl bedeutet, und
(R₁₄)₀₋₂ für 0 bis 2 gleiche oder voneinander verschiedene Substituenten ausgewählt aus der Gruppe C₁-C₄-Alkyl, C₁-C₄-Alkoxy, C₂-C₄-Alkanoylamino, Ureido, Halogen und Sulfo steht; oder ein Rest der Formel (18) 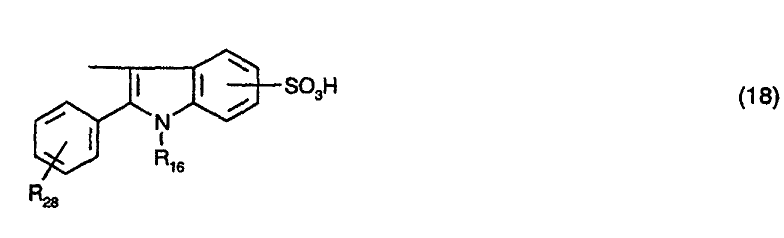 ist,
worin
R₁₆ Wasserstoff, C₁-C₄-Alkyl und R₂₈ Wasserstoff, C₁-C₄-Alkyl, C₁-C₄-Alkoxy, C₂-C₄-Alkanoylamino oder Halogen bedeuten;
oder einen Rest der Formel 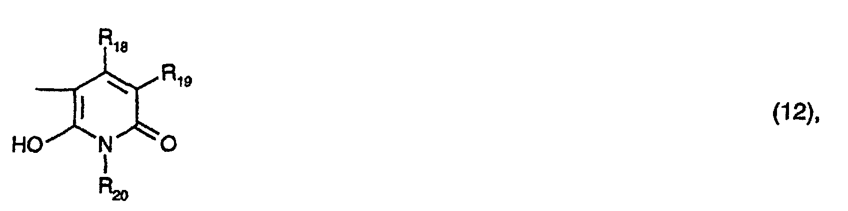 worin
R₁₈ Wasserstoff oder C₁-C₄-Alkyl,
R₁₉ Wasserstoff und
R₂₀ Wasserstoff, C₁-C₄-Alkyl oder gegebenenfalls durch C₁-C₄-Alkyl, C₁-C₄-Alkoxy, C₂-C₄-Alkanoylamino, Ureido, Halogen oder Sulfo substituiertes Phenyl sind;
oder einen Rest der Formel (19) 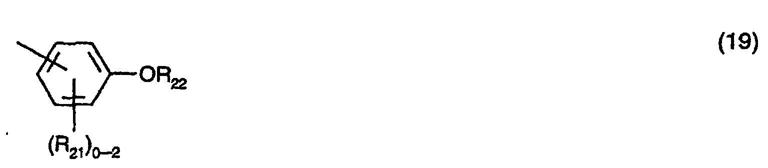 bedeutet,
worin
(R₂₁)₀₋₂ für 0 bis 2 gleiche oder voneinander verschiedene Substituenten ausgewählt aus der Gruppe C₁-C₄-Alkyl, C₁-C₄-Alkoxy, C₂-C₄-Alkanoylamino, Ureido, Halogen und Sulfo steht, und
R₂₂ Wasserstoff oder C₁-C₄-Alkyl ist;
oder ein Rest der Formel (20) 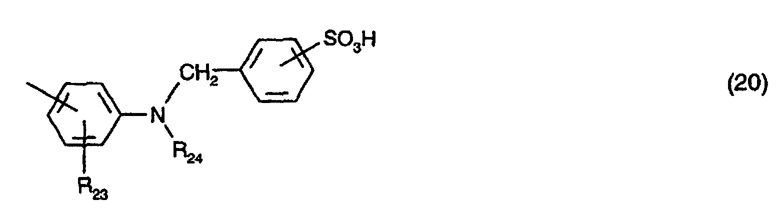 ist,
worin
R₂₃ Wasserstoff, C₁-C₄-Alkyl, C₁-C₄-Alkoxy, C₂-C₄-Alkanoylamino oder Halogen und
R₂₄ Wasserstoff oder C₁-C₄-Alkyl sind;
oder Reste der Formel (21) oder (22) 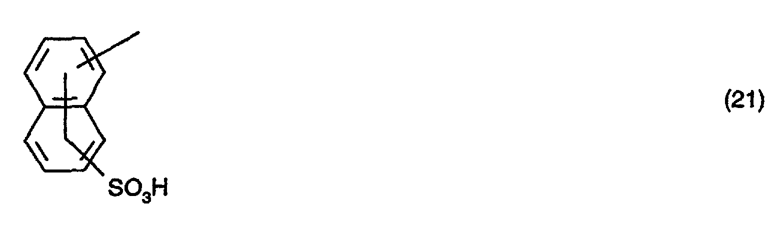 oder 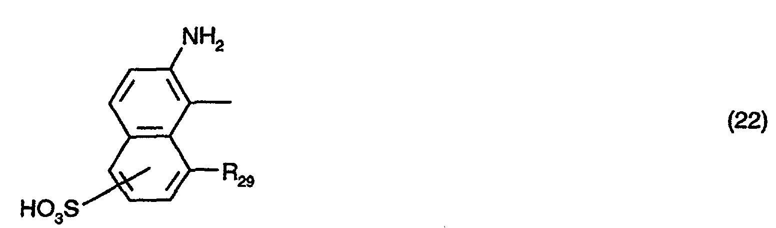 bedeutet,
worin
R₂₉ Wasserstoff oder Hydroxyl ist.

2. Farbstoffmischungen gemäss Anspruch 1, worin Y eine Gruppe der Formel -OSO₃H ist.

3. Farbstoffmischungen gemäss einem der Ansprüche 1 und 2, worin R₅ gegebenenfalls durch Sulfo oder Carboxyl substituiertes Phenyl ist.

4. Farbstoffmischungen gemäss einem der Ansprüche 1 bis 3, worin X₁ und X₂ Chlor bedeuten.

5. Farbstoffmischungen gemäss Anspruch 1, worin R₁₂ Methyl, (R₁₄)₀₋₂ für 0 bis 2 gleiche oder voneinander verschiedene Halogenatome, insbesondere Chlor, steht, R₁₆ und R₂₈ Wasserstoff, R₁₈ Wasserstoff oder Methyl und R₂₀ Wasserstoff oder C₁-C₄-Alkyl bedeutet, (R₂₁)₀₋₂ für 0 bis 2 gleiche oder voneinander verschiedene Substituenten ausgewählt aus der Gruppe C₁-C₄-Alkyl und C₁-C₄-Alkoxy bedeuten, und R₂₃ Wasserstoff, C₁-C₄-Alkyl oder C₁-C₄-Alkoxy bedeutet.

6. Verwendung der Farbstoffmischungen gemäss einem der Ansprüche 1 bis 5 zum Färben oder Bedrucken von hydroxylgruppenhaltigen oder stickstoffhaltigen Fasermaterialien.

7. Verwendung gemäss Anspruch 6 zum Färben oder Bedrucken von natürlichem oder synthetischem Polyamidfasermaterial.

## Claims

1. A dye mixture, comprising at least one anionic dye of formula (1) 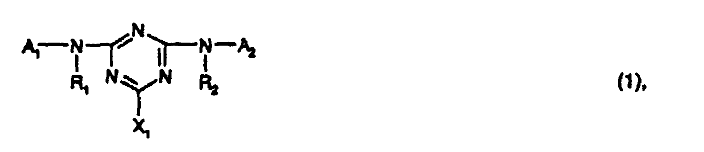 and at least one anionic dye of formula (2) 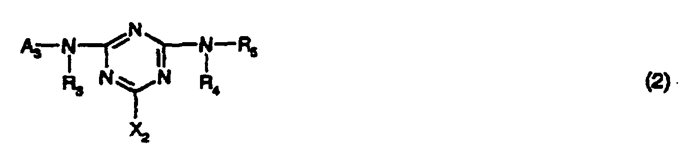 in which
R₁, R₂, R₃ and R₄ are each independently of one another hydrogen or C₁-C₄alkyl,
R₆ is phenyl which is unsubstituted or substituted by C₁-C₄alkyl, C₁-C₄alkoxy, C₂-C₄alkanoylamino, carboxyl, sulfo, carbamoyl, ureido, halogen or by a radical of formula -SO₂-Z, or the radical of formula -N(R₄)-R₅ is a ring which may contain further hetero atoms, where Z is a group of formula -CH=CH₂ or -CH₂-CH₂-Y, and Y is a leaving group,
X₁ and X₂ are identical and are halogen, N-mono- or N,N-di-C₁-C₄alkylamino which may be substituted in the alkyl moiety by hydroxyl, or are cyclohexylamino, phenylamino, morpholino or piperidin-1-yl, and
A₁, A₂ and A₃ are identical and are radicals of formula (16) 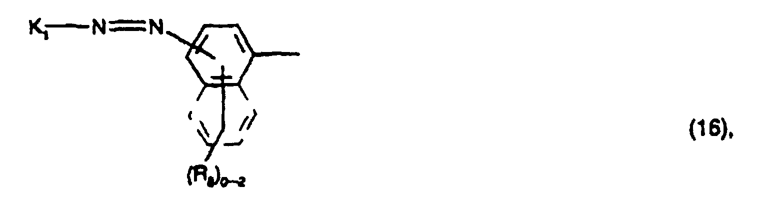 or 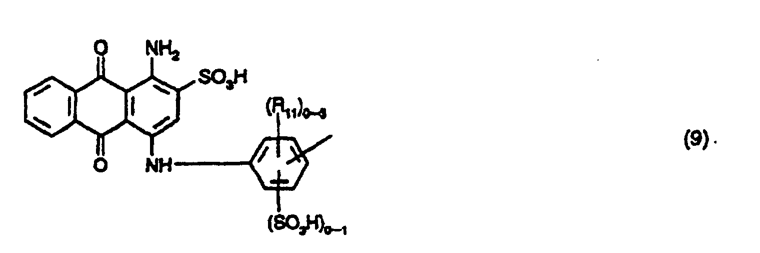 in which
(R₈)₀₋₂ is 0 to 2 identical or different substituents selected from the group consisting of C₁-C₄alkyl, C₁-C₄alkoxy, C₂-C₄alkanoylamino, ureido and sulfo,
(R₁₁)₀₋₃ is 0 to 3 identical or different substituents selected from the group consisting of C₁-C₄alkyl, C₁-C₄alkoxy and halogen, and
K₁ is a radical of formula (17) 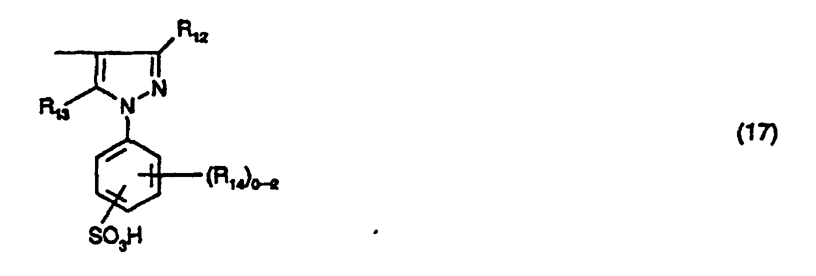 in which
R₁₂ is methyl or carboxyl,
R₁₃ is amino or hydroxyl, and
(R₁₄)₀₋₂ is 0 to 2 identical or different substituents selected from the group consisting of C₁-C₄alkyl, C₁-C₄alkoxy, C₂-C₄alkanoylamino, ureido, halogen and sulfo;
or a radical of formula (18) 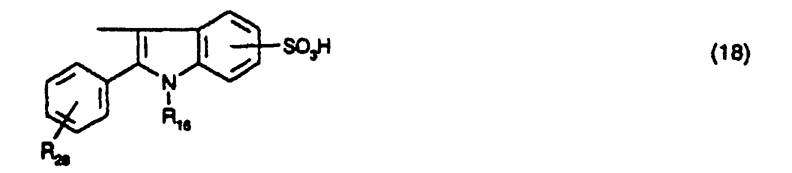 in which R₁₆ is hydrogen or C₁-C₄alkyl and R₂₈ is hydrogen, C₁-C₄alkyl, C₁-C₄alkoxy, C₂-C₄alkanoylamino or halogen;
or a radical of formula 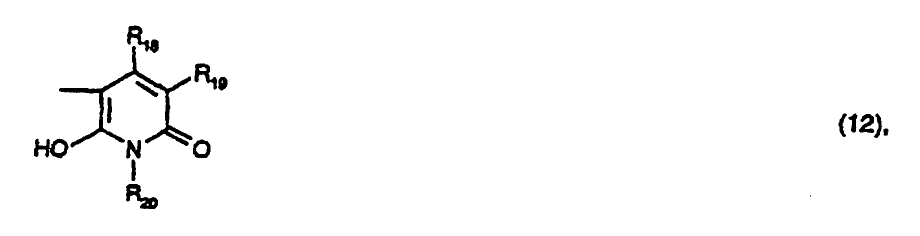 in which R₁₈ is hydrogen or C₁-C₄alkyl,
R₁₉ is hydrogen, and
R₂₀ is hydrogen, C₁-C₄alkyl, or phenyl which is unsubstituted or substituted by C₁-C₄alkyl, C₁-C₄alkoxy, C₂-C₄alkanoylamino, ureido, halogen or sulfo;
or a radical of formula (19) 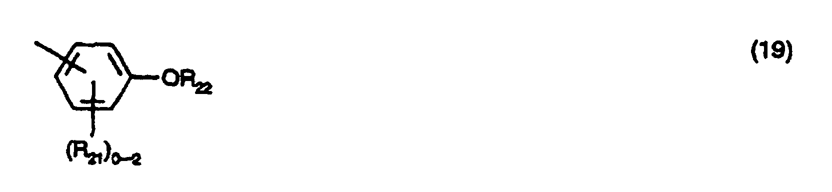 in which
(R₂₁)₀₋₂ is 0 to 2 identical or different substituents selected from the group consisting of C₁-C₄alkyl, C₁-C₄alkoxy, C₂-C₄alkanoylamino, ureido, halogen and sulfo, and
R₂₂ is hydrogen or C₁-C₄alkyl;
or a radical of formula (20) 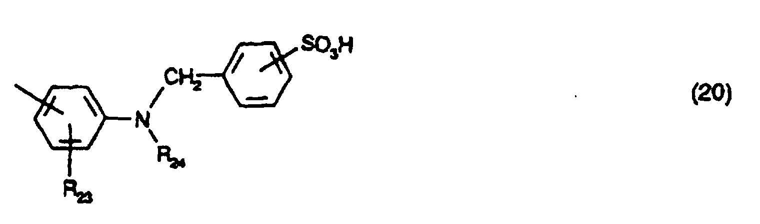 in which
R₂₃ is hydrogen, C₁-C₄alkyl, C₁-C₄alkoxy, C₂-C₄alkanoylamino or halogen, and R₂₄ is hydrogen or C₁-C₄alkyl;
or radicals of formula (21) or (22) 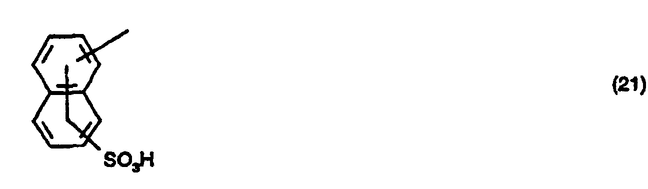 or 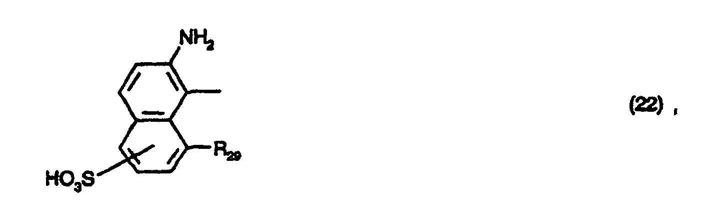 in which R₂₉ is hydrogen or hydroxyl.

2. A dye mixture according to claim 1, wherein
Y is a group of formula -OSO₃H.

3. A dye mixture according to one of claims 1 and 2, wherein
R₅ is phenyl which is unsubstituted or substituted by sulfo or carboxyl.

4. A dye mixture according to any one of claims 1 to 3, wherein
X₁ and X₂ are chloro.

5. A dye mixture according to claim 1, wherein
R₁₂ is methyl, (R₁₄)₀₋₂ is 0 to 2 identical or different halogen atoms, especially chloro,
R₁₆ and R₂₈ are hydrogen,
R₁₈ is hydrogen or methyl, and R₂₀ is hydrogen or C₁-C₄alkyl,
(R₂₁)₀₋₂ is 0 to 2 identical or different substituents selected from the group consisting of C₁-C₄alkyl and C₁-C₄alkoxy, and
R₂₃ is hydrogen, C₁-C₄alkyl or C₁-C₄alkoxy.

6. Use of a dye mixture according to any one of claims 1 to 5 for dyeing or printing hydroxyl-containing or nitrogen-containing fibre materials.

7. Use according to claim 6 for dyeing or printing natural or synthetic polyamide fibre material.

## Revendications

1. Mélanges de colorants **caractérisés en ce qu'**ils contiennent au moins un colorant anionique de formule (1) 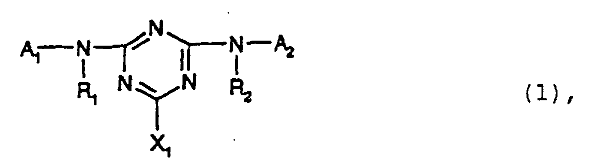 et au moins un colorant anionique de formule (2) 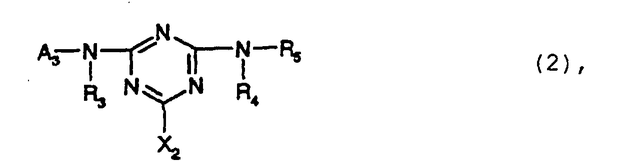 où
R₁, R₂, R₃ et R₄ représentent, indépendamment les uns des autres, un atome d'hydrogène ou un groupe alkyle en C₁-C₄,
R₅ représente un groupe phényle éventuellement substitué par des substituants alkyle en C₁-C₄, alkoxy en C₁-C₄, (alcanoyl en C₂-C₄) amino, carboxyle, sulfo, carbamoyle, uréido, halogène ou par un reste de formule -SO₂-Z ou le reste de formule -N(R₄)-R₆ représente un cycle éventuellement présentant d'autres hétéroatomes, Z représentant un groupe de formule -CH=CH₂ ou -CH₂-CH₂-Y et Y représente un groupe partant,
X₁ et X₂ sont identiques et représentent un atome d'halogène, un groupe N-mono- ou N,N-di-(alkyl en C₁-C₄)amino éventuellement substitué dans le fragment alkyle par un substituant hydroxyle, un groupe cyclohexylamino, phénylamino, morpholino ou pipéridin-1-yle, et
A₁, A₂ et A₃ sont identiques et représentent des restes de formule (16) 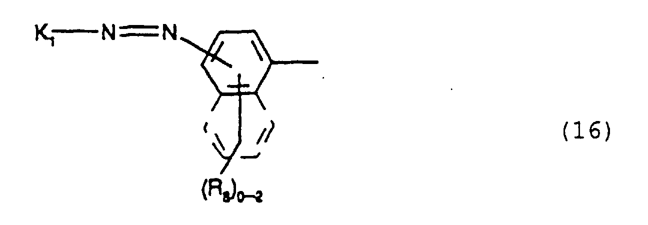 ou 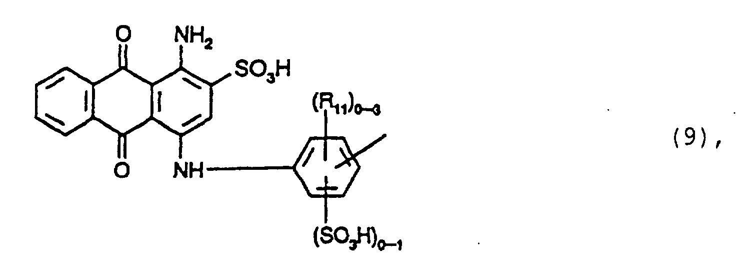 où
(R₈)₀₋₂ représente 0 à 2 substituants identiques ou différents pris dans le groupe comprenant alkyle en C₁-C₄, alkoxy en C₁-C₄, (alcanoyl en C₂-C₄)amino, carboxyle et sulfo,
(R₁₁)₀₋₃ représente 0 à 3 substituants identiques ou différents pris dans le groupe comprenant alkyle en C₁-C₄, alkoxy en C₁-C₄ et halogène, et
K₁ représente un reste de formule (17) 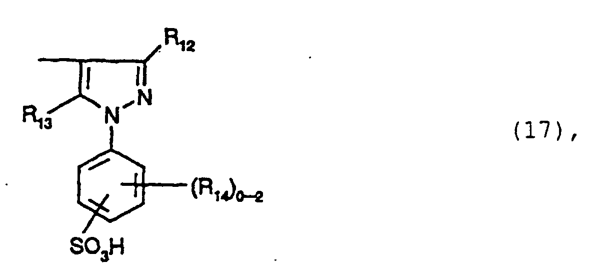 où
R₁₂ représente un groupe méthyle ou carboxyle,
R₁₃ représente un groupe amino ou hydroxyle, et
(R₁₄)₀₋₂ représente 0 à 2 substituants identiques ou différents pris dans le groupe comprenant alkyle en C₁-C₄, alkoxy en C₁-C₄, (alcanoyl en C₂-C₄)amino, uréido, halogène et sulfo ;
ou un reste de formule (18) 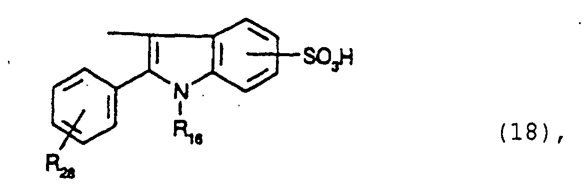 où
R₁₈ représente un atome d'hydrogène, un groupe alkyle en C₁-C₄ et R₂₈ représente un atome d'hydrogène, des groupes alkyle en C₁-C₄, alkoxy en C₁-C₄, (alcanoyl en C₂-C₄)-amino ou halogène ;
ou un reste de formule 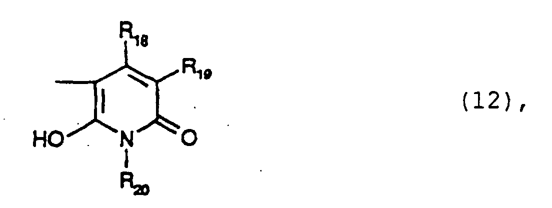 où
R₁₈ représente un atome d'hydrogène ou un groupe alkyle en C₁-C₄,
R₁₉ représente un atome d'hydrogène et
R₂₀ représente un atome d'hydrogène, un groupe alkyle en C₁-C₄ ou un groupe phényle éventuellement substitué par des substituants alkyle en C₁-C₄, alkoxy en C₁-C₄, (alcanoyl en C₂-C₄)amino, uréido, halogène ou sulfo ;
ou un reste de formule (19) 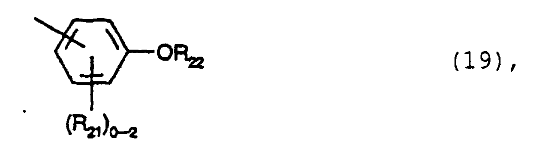 où
(R₂₁)₀₋₂ représente 0 à 2 substituants identiques ou différents pris dans le groupe comprenant alkyle en C₁-C₄, alkoxy en C₁-C₄, (alcanoyl en C₂-C₄)amino, uréido, halogène et sulfo,
et
R₂₂ représente un atome d'hydrogène ou un groupe alkyle en C₁-C₄ ;
ou un reste de formule (20) 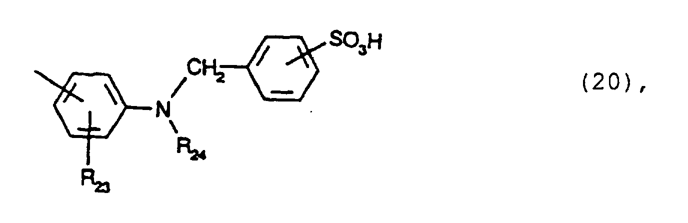 où
R₂₃ représente un atome d'hydrogène, des groupes alkyle en C₁-C₄, alkoxy en C₁-C₄, (alcanoyl en C₂-C₄)-amino ou halogène et
R₂₄ représente un atome d'hydrogène ou un groupe alkyle en C₁-C₄ ;
ou des restes de formule (21) ou (22) 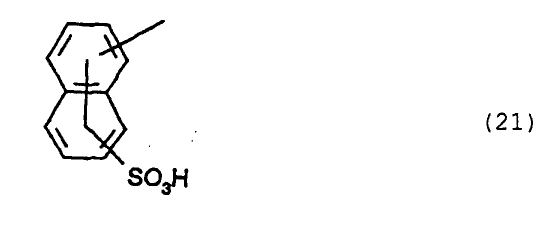 ou 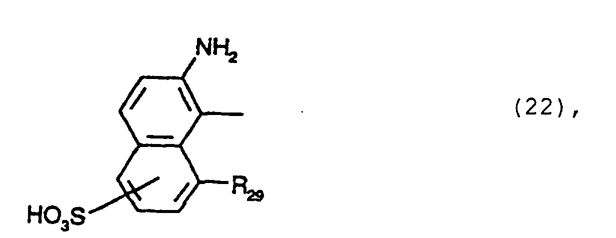 où
R₂₉ représente un atome d'hydrogène ou un groupe hydroxyle.

2. Mélanges de colorants selon la revendication 1, où Y représente un groupe de formule -OSO₃H.

3. Mélanges de colorants selon l'une des revendications 1 et 2, où R₅ représente un groupe phényle éventuellement substitué par des substituants sulfo ou carboxyle.

4. Mélanges de colorants selon l'une des revendications 1 à 3, où X₁ et X₂ représentent un atome de chlore.

5. Mélanges de colorants selon la revendication 1, où R₁₂ représente un groupe méthyle, (R₁₄)₀₋₂ représente 0 à 2 atomes d'halogènes identiques ou différents, en particulier des atomes de chlore, R₁₆ et R₂₈ représentent un atome d'hydrogène, R₁₈ représente un atome d'hydrogène ou un groupe méthyle et R₂₀ représente un atome d'hydrogène ou un groupe alkyle en C₁-C₄, (R₂₁)₀₋₂ représente 0 à 2 substituants identiques ou différents pris dans le groupe comprenant alkyle en C₁-C₄ et alkoxy en C₁-C₄, et R₂₃ représente un atome d'hydrogène, des groupes alkyle en C₁-C₄ ou alkoxy en C₁-C₄.

6. Utilisation des mélanges de colorants selon l'une des revendications 1 à 5 pour la teinture ou l'impression de matières fibreuses azotées ou présentant des groupes hydroxyle.

7. Utilisation selon la revendication 6 pour la teinture ou l'impression de matières fibreuses polyamides naturels ou synthétiques.
